# EUROPÄISCHE PATENTSCHRIFT

(11) **EP 4 293 634 B1**
(45) Veröffentlichungstag und Bekanntmachung des Hinweises auf die Patenterteilung: **06.05.2026**
(21) Anmeldenummer: 23173686.9
(22) Anmeldetag: 16.05.2023
(51) Int. Cl.: G06V 20/58, G06V 10/44, G06V 10/74, G06V 10/82

(54) **VERFAHREN, PROZESSORSCHALTUNG UND COMPUTERLESBARES SPEICHERMEDIUM ZUM DURCHFÜHREN EINER VERKEHRSOBJEKTDETEKTION IN EINEM KRAFTFAHRZEUG**
METHOD, PROCESSOR CIRCUIT AND COMPUTER-READABLE STORAGE MEDIUM FOR CARRYING OUT TRAFFIC OBJECT DETECTION IN A MOTOR VEHICLE
PROCÉDÉ, CIRCUIT PROCESSEUR ET SUPPORT D'ENREGISTREMENT LISIBLE PAR ORDINATEUR POUR EFFECTUER UNE DÉTECTION D'OBJET DE TRAFIC DANS UN VÉHICULE AUTOMOBILE

(30) Priorität: 17.06.2022 DE 102022115189
(43) Veröffentlichungstag der Anmeldung: 20.12.2023
(73) Patentinhaber: VOLKSWAGEN AKTIENGESELLSCHAFT, 38440 Wolfsburg (DE); CARIAD SE, 38440 Wolfsburg (DE)
(72) Erfinder: Bayzidi, Yasin, 38102 Braunschweig (DE); Hüger, Fabian, 38302 Wolfenbüttel (DE); Schneider, Jan David, 38446 Wolfsburg (DE)
(74) Vertreter: Hofstetter, Schurack & Partner

(56) Entgegenhaltungen:
- CAO CONG ET AL: "Solving Occlusion Problem in Pedestrian Detection by Constructing Discriminative Part Layers", 2017 IEEE WINTER CONFERENCE ON APPLICATIONS OF COMPUTER VISION (WACV), IEEE, 24 March 2017 (2017-03-24), pages 91 - 99, XP033096789, DOI: 10.1109/WACV.2017.18
- YANQIU XIAO ET AL: "Deep learning for occluded and multi-scale pedestrian detection: A review", IET IMAGE PROCESSING, IET, UK, vol. 15, no. 2, 14 December 2020 (2020-12-14), pages 286 - 301, XP006116909, ISSN: 1751-9659, DOI: 10.1049/IPR2.12042

## Beschreibung

Die Erfindung betrifft ein Verfahren zum Betreiben einer Verkehrsobjektdetektion in einem Steuergerät eines Kraftfahrzeugs. Die Erfindung betrifft auch eine Prozessorschaltung zum Durchführen des Verfahrens sowie ein computerlesbares Speichermedium, um eine Prozessorschaltung zum Durchführen des Verfahrens zu ertüchtigen.

Die Verkehrsobjektdetektion ermittelt auf Grundlage von Bilddaten eines jeweiligen Kamerabilds oder Bilddatensatzes, also eines jeweiligen Abbilds der Umgebung, mittels zumindest eines Modells des maschinellen Lernens (ML-Modell), ob und wo ein Passant, also z.B. ein Fußgänger, in dem jeweiligen Kamerabild der Umgebung abgebildet ist. Daraus kann mittels einer Umrechnung eines Sensorkoordinatensystems des Umgebungssensors in ein absolutes Koordinatensystem des Kraftfahrzeugs ermittelt werden, in welcher Relativposition zum Kraftfahrzeug sich der Passant befindet. Dies kann einer automatisierten Fahrfunktion des Kraftfahrzeugs signalisiert werden, die daraufhin eine Fahrtrajektorie des Kraftfahrzeugs für ein kollisionsfreies Passieren des Passanten berechnen kann. Die automatisierte Fahrfunktion kann beispielsweise eine Fahrerassistenzfunktion (wie beispielsweise eine Spurhalteassistenz und/oder eine Einparkassistenz) und/oder eine autonome Fahrfunktion (Autopilot), sein, die eine Fahrtrajektorie für das automatisierte, kollisionsfreie Führen des Kraftfahrzeugs planen kann, wenn bekannt ist, wo sich in der Umgebung beispielsweise Passanten befinden.

Entsprechender Stand der Technik hierzu ist beispielsweise aus den folgenden wissenschaftlichen Veröffentlichungen bekannt:
- Shifeng Zhang, Longyin Wen, Xiao Bian, Zhen Lei, and Stan Z. Li, "Occlusion-aware R-CNN: Detecting Pedestrians in a Crowd", European Conference on Compuer Vision - ECCV 2018;
- Wanli Ouyang and Xiaogang Wang, "A Discriminative Deep Model for Pedestrian Detection with Occlusion Handling", IEEE, 2012;
- Chen Ning, Li Menglu, Yuan Hao, Su Xueping, Li Yunhong, "Survey of pedestrian detection with occlusion", Complex & Intelligent Systems, 2021;
- Alonso I.P., Llorca D.F., Sotelo M.Ä., Bergasa L.M., de Toro P.R., Nuevo J., Ocaña M., Garrido M.A.G., "Combination of Feature Extraction Methods for SVM Pedestrian Detection", Transactions on Intelligent Transportation Systems - IEEE 2007;
- He Y., Zhu C., Yin X.-C, "Mutual-Supervised Feature Modulation Network for Occluded Pedestrian Detection", 25th International Conference on Pattern Recognition (ICPR), 2021;
- Zhou J., Hoang J., "Real Time Robust Human Detection and Tracking System", Computer Society Conference on Computer Vision and Pattern Recognition, IEEE, 2005
- CAO GONG et al., "Solving Occlusion Problem in Pedestrian Detection by Constructing Discriminative Part Layers", 2017 IEEE Winter Conference on Applications of Computer Vision (WACV), IEEE, 24. März 2017, Seiten 91-99;
   Yanqiu Xiao et al., "Deep learning for occluded and multi-scale pedestrian detection: A review", IET Image Processing, IET, UK, Bd. 15, Nr. 2, 14. Dezember 2020, Seiten 286-301.

Ein wichtiger Umstand beim Detektieren von Passanten auf der Grundlage von Abbildern der Umgebung ist, dass Passanten nicht immer mit ihrem vollständigen Körper sichtbar sind, sondern es zu einer Verdeckung (Okklusion) kommen kann, wenn beispielsweise mehrere Passanten nebeneinander stehen und/oder ein Passant hinter einem Objekt, beispielsweise einem Pfosten eines Verkehrsschildes, steht. Eine Passantendetektion auf der Grundlage zumindest eines Modells des maschinellen Lernens kann hier dahingehend versagen, dass ein solcher Passant nicht detektiert wird, wie dies auch in den genannten Veröffentlichungen beschrieben ist (Okklusionsproblem). Der zusätzliche Betrieb von weiteren ML-Modellen, die für das Detektieren von teilverdeckten Passanten trainiert sind, von denen also nur ein Teilbereich sichtbar ist, wird im Zusammenhang mit der Passantendetektion in einem Kraftfahrzeug aus dem Grunde vermieden, dass eine entsprechend zusätzliche Rechenleistung notwendig wäre, die in der Regel in einer Prozessorschaltung eines Steuergeräts eines Kraftfahrzeugs nicht verfügbar ist.

Der Erfindung liegt die Aufgabe zugrunde, zu einem Bilddatensatz effizient zu erkennen, ob darin auch ein nur teilweise sichtbares Verkehrsobjekt (wie insbesondere ein nur teilweise sichtbarer Passant) abgebildet ist.

Die Aufgabe wird durch die Gegenstände der unabhängigen Patentansprüche gelöst. Vorteilhafte Weiterentwicklungen der Erfindung sind durch die abhängigen Patentansprüche, die folgende Beschreibung sowie die Figuren beschrieben.

Als eine Lösung umfasst die Erfindung ein Verfahren zum Betreiben oder Durchführen einer Passantendetektion in einer Prozessorschaltung eines Kraftfahrzeugs. Eine solche Prozessorschaltung kann durch ein Steuergerät oder einen Verbund aus mehreren Steuergeräten des Kraftfahrzeugs gebildet sein.

Die Passantendetektion basiert in an sich bekannter Weise darauf, dass zumindest ein Bilddatensatz (also ein Kamerabild oder eine entsprechende Bildsequenz) aus zumindest einem Umgebungssensor des Kraftfahrzeugs empfangen wird. Ein solcher einzelner Bilddatensatz beschreibt eine jeweilige Abbildung oder ein Abbild oder ein Einzelbild einer Umgebung des Kraftfahrzeugs. Der zumindest eine Umgebungssensor kann hierzu in an sich bekannter Weise eine oder mehrere Umgebungskameras vorsehen. Der Bilddatensatz kann beispielsweise alternativ ein Einzelbild aus einem Video-Datenstrom sein.

Das Verfahren geht davon aus, dass in der aus dem Stand der Technik bekannten Weise mittels zumindest eines Modells des maschinellen Lernens (ML-Modell) aus den Bilddaten des Bilddatensatzes mittels einer Merkmalsextraktionseinheit des zumindest einen ML-Modells Merkmalsdaten von Bildmerkmalen extrahiert werden. Die einzelnen Pixel oder Bildpunkte der Abbildung werden also dahingehend zusammengefasst oder untersucht, ob sie zumindest ein vorbestimmtes Bildmerkmal repräsentieren, beispielsweise eine Struktur oder eine Textur oder ein Muster. Ein Beispiel für eine solche Merkmalsextration ist eine Kantendetektion.

Des Weiteren basiert das Verfahren darauf, dass aus dem Stand der Technik bekannt ist, dass in dem jeweiligen Abbild oder der jeweiligen Abbildung (also den Bilddaten des Bilddatensatzes) Bounding-Boxen oder einfassende Konturen ermittelt werden können, in der Abbildung die einen Bildbereich umrahmen oder abgrenzen, der ein potentielles Abbild eines Passanten enthält. Solche Bounding-Boxen können anhand der beschriebenen Bildmerkmale und/oder mittels eines vorgeschalteten Teils des zumindest einen ML-Modells ermittelt werden. Eine solche Bounding-Box stellt eine "Hypothese" oder eine Vordetektion dar, die darauf basiert, dass in dem Bildbereich solche Bildmerkmale erkannt wurden oder enthalten sind, die zusammen eine Wahrscheinlichkeit dafür, dass ein Passant abgebildet ist, oder dass zumindest ein Objekt (von noch unbekannter Objektklasse) enthalten ist, oberhalb eines vorgegebenen Grenzwertes ist. Innerhalb der jeweiligen Bounding-Box wird dann anhand der Bildmerkmale aus der jeweiligen Bounding-Box mittels einer Klassifikatoreinheit des zumindest einen ML-Modells jeweils eine Detektion oder Klassifikation eines vollständig oder überwiegend abgebildeten Passanten durchgeführt (falls tatsächlich eine Person oder allgemein Passant in der Bounding-Box abgebildet ist). Befinden sich also in der jeweiligen Bounding-Box solche Bildmerkmale, die einen vollständig sichtbaren Passanten darstellen, so reagiert die Klassifikatoreinheit mit einem Detektionsergebnis, das auf die Gegenwart oder das Erkennen eines solchen Passanten hinweist (ansonsten bevorzugt nicht).

Eine Klassifikatoreinheit hat eine Detektionsschwelle, oberhalb welcher eine Klassifikatoreinheit auch dann innerhalb einer Bounding-Box einen Passanten erkennt, wenn diese nicht vollständig, aber zumindest überwiegend, beispielsweise zu mehr als 70 Prozent oder allgemein zu mehr als einem vorgestimmten Mindestanteil, abgebildet ist. Der Mindestanteil kann in einem Bereich von 65 bis 90 Prozent liegen, um Beispiele zu nennen. Es reicht also der Klassifikatoreinheit, wenn ein Passant zu einem entsprechenden überwiegenden Teil sichtbar ist.

Als Detektionsergebnis der Detektion durch die Klassifikatoreinheit wird dann die jeweilige Bounding-Box identifiziert oder kenntlich gemacht, für welche die Klassifikatoreinheit einen abgebildeten Passanten erkannt oder klassifiziert hat. Die jeweilige Bounding-Box kann durch ein Detektionssignal identifiziert werden. Somit sind all diejenigen Bounding-Boxen bekannt, für welche die Klassifikatoreinheit die Gegenwart oder die Abbildung eines Passanten erkannt hat. Das Detektionssignal kann z.B. eine ID der Bounding-Box und/oder Koordinaten angeben, um nur Beispiele zu nennen.

Wie bereits ausgeführt, hat eine solche Klassifikatoreinheit aber eine Detektionsschwelle, das heißt wenn in einer Bounding-Box ein Passant nur teilweise abgebildet ist, und zwar weniger von dem Passanten zu sehen ist, als die Detektionsschwelle der Klassifikatoreinheit verlangt, so wird dieser Passant nicht durch die Klassifikatoreinheit erkannt. Es kommt dann zu dem eingangs beschriebenen Effekt der Verdeckung oder Okklusion, das heißt der Passant bleibt durch die Klassifikatoreinheit undetektiert.

Um eine zusätzliche Prüfung auf ein Vorhandensein des Okklusionsproblems bereitzustellen, die auch einen solchen Passanten detektiert, der durch die eigentliche Klassifikatoreinheit undetektiert geblieben sind, ist erfindungsgemäß nun vorgesehen, dass für einige oder alle der Bounding-Boxen und/oder für zusätzlich gebildete Bounding-Boxen (wie dies im Weiteren noch erläutert wird) jeweils die darin enthaltenen oder abgegrenzten Bildmerkmale eventuell auf einen übersehenen Passanten hindeuten.

Dazu ist keine spezialisierte Klassifikatoreinheit eines ML-Modells, beispielsweise eines künstlichen neuronalen Netzwerks, notwendig, sondern stattdessen werden die Bildmerkmale zu einem Merkmalsvektor zusammengefasst, damit sie aufwandsarm überprüft werden können. Die Bildmerkmale werden also zu einem Vektor aufgereiht oder durch diesen repräsentiert. Dieser Merkmalsvektor stellt einen Punkt in einem Merkmalsraum dar. Die Anzahl der Dimensionen dieses Merkmalsraums entspricht dabei in an sich bekannter Weise der Anzahl der Vektorkomponenten des Merkmalsvektors. In diesem Merkmalsraum sind statistische Verteilungsmodelle definiert, die für jeden Punkt des Merkmalsraums definieren oder angeben, ob oder mit welcher Wahrscheinlichkeit dieser Punkt des Merkmalsraums (also der den Punkt beschreibende Merkmalsvektor) eine Abbildung eines Teilbereichs eines Passanten und/oder eines Körpers einer Person darstellt, also einen bisher undetektierten Passanten.

Mit anderen Worten sind mehrere statistische Verteilungsmodelle definiert, von denen jedes eine statistische Verteilung von Bildmerkmalen ein nur teilweise sichtbarer Passant und/oder eines nur zu einem Teilbereich sichtbaren Körpers einer Person modelliert, wobei die statistische Verteilung den Merkmalsraum einteilt, in welchem die beschriebenen Bildmerkmale in einem jeweiligen Merkmalsvektor zusammengefasst sind. Mit "Teilbereich" ist hierbei gemeint, dass die Verteilungsmodelle auf solchen Merkmalsvektoren beruhen, die eine nicht-überwiegende Abbildung des Passanten darstellen, also beispielsweise nur ein einzelnes Körperteil oder eine Verdeckung des Passanten von mehr als einem solchen "Okklusionsanteil" darstellen, der in einem Bereich von 25 Prozent bis 80 Prozent liegen kann. Beispielsweise kann also ein Verteilungsmodell nur einen Fuß und/oder ein anderes Verteilungsmodell nur eine Hand und/oder ein anderes Verteilungsmodell nur einen Kopf einer Person repräsentieren, wenn es um eine Personendetektion geht. Ein Verteilungsmodell kann auch beispielsweise einen Torso oder ein Beinpaar einer Person repräsentieren, also mehr als nur eine Gliedmaße. Bei einem Kraftfahrzeug kann beispielsweise ein Teilbereich nur einen Radkasten mit Rad oder eine Seitenansicht nur eines Kofferraums sein.

Ein Distanzmaß, das zum Ermitteln einer Distanz des Merkmalsvektors zum jeweiligen Verteilungsmodell beschreibt, kann beispielsweise auf einem Wahrscheinlichkeitswert beruhen, den das statistische Verteilungsmodell zu dem jeweiligen Merkmalsvektor ausgeben kann. Das Distanzmaß kann auch ein binäres Maß sein, das angibt, ob eine Zugehörigkeit besteht oder nicht. Als statistisches Verteilungsmodell kann hierzu beispielsweise (für Wahrscheinlichkeitsangaben) eine Gauß-Kernel-Verteilungsdichte vorgesehen sein oder (bei einem binären Modell) eine Support Vector Machine SVM. Es kann aber auch ein Klassifikator als statistisches Verteilungsmodell verwendet werden, der beispielsweise auf einem künstlichen neuronalen Netzwerk beruhen kann, was durch die Verwendung eines entsprechend kurzen Merkmalsvektors nur geringen Rechenaufwand erfordert.

Somit besteht nun zu einem Merkmalsvektor der Bildmerkmalen einer Bounding-Box und bezüglich jedes Verteilungsmodells ein Distanzwert, der angibt, wie ähnlich der Merkmalsvektor zu dem Verteilungsmodell ist oder zu demjenigen Teilbereich eines Passanten oder Körperbereich einer Person, der durch das jeweilige Verteilungsmodell repräsentiert ist. Der Distanzwert wird mit einem vorgegebenen Schwellenwert oder Auslösewert verglichen und falls gemäß dem Vergleich der Distanzwert zu einem der Verteilungsmodelle kleiner als der Schwellenwert ist, wird signalisiert, dass bei der Klassifikatoreinheit ein Passant undetektiert geblieben ist, der nun anhand des Verteilungsmodells detektiert wurde. Ist nämlich der Distanzwert kleiner als der Schwellenwert, so besteht eine entsprechend große Ähnlichkeit oder Zugehörigkeit des Merkmalsvektors zu dem Verteilungsmodell, das heißt der Merkmalsvektor repräsentiert mit einer entsprechend großen Wahrscheinlichkeit einen Teilbereich eines Passanten oder Körperbereichs einer Person und/oder eines menschlichen Körpers.

Der Merkmalsvektor, der für eine jeweilige Bounding-Box ermittelt wird, kann die Aneinanderreihung oder Auflistung aller Bildmerkmale aus der Bounding-Box vorsehen. Bevorzugt ist aber vorgesehen, die Länge des Merkmalsvektors zu verringern, da in einer Bounding-Box eine große Anzahl an Bildmerkmalen, insbesondere mehr als 100, oder mehr als 1000, enthalten sein können. Entsprechend sieht die Erfindung vor, dass der Merkmalsvektor gebildet wird, indem die Bildmerkmale zu einem temporären Vektor zusammengefasst werden, also einem Vektor, der alle Bildmerkmale umfasst. Dieser temporäre Vektor wird mittels einer dimensionsreduzierenden Abbildung zu dem Merkmalsvektor reduziert. Der Merkmalsvektor weist also weniger Vektorkomponenten auf, als der temporäre Vektor. Als hierzu geeignete dimensionsreduzierende Abbildung kann beispielsweise eines der folgenden aus dem Stand der Technik bekannten Verfahren verwendet werden: Eine multidimensionale Skalierung (MDS), eine Greedy-Forward-Selection, eine korrelationsbasierte Feature-Selection.

Durch die Erfindung ergibt sich der Vorteil, dass mit verhältnismäßig geringem Rechenaufwand, nämlich dem Berechnen eines Merkmalsvektors und einem Vergleich mit mehreren Verteilungsmodellen, ermittelt werden kann, ob durch die Klassifikatoreinheit des zumindest einen ML-Modells eines Passanten in einem Bilddatensatz übersehen wurde, weil von ihr nur ein Teilbereich sichtbar oder abgebildet ist, der insbesondere kleiner als die Detektionsschwelle der Klassifikatoreinheit war.

Die Erfindung kann auch auf andere Verkehrsteilnehmer als Passanten angewendet werden, also auch auf Kraftfahrzeuge und/oder Fahrradfahrer, d.h. auf eine Verkehrsteilnehmerdetektion. Die Erfindung kann auch auf andere stationäre Verkehrsinfrastrukturobjekte angewendet werden, also auch auf Verkehrsschilder, Fahrbahnmarkierungen, Verkehrssignale (Ampeln), d.h. auf eine Verkehrsinfrastrukturdetektion. Allgemein kann die Erfindung auf Verkehrsobjekte, also Verkehrsteilnehmer und Verkehrsinfrastrukturobjekte angewendet werden, also auf eine Verkehrsobjektdetektion.

Wenn hier also von einem Passanten die Rede ist, kann es sich auch um einen Verkehrsteilnehmer eines anderen Typs (Kraftfahrzeug und/oder Fahrradfahrer) und/oder um ein Verkehrsinfrastrukturobjekt handeln. Allgemein muss es sich also nicht nur um einen Passanten handeln, sondern es kann sich um ein Verkehrsobjekt im allgemeinen handeln.

Die Erfindung umfasst auch Weiterentwicklungen, durch die sich zusätzliche Vorteile ergeben.

Die beschriebenen Bounding-Boxen, die als Hypothesen oder Vorschläge oder Eingabedaten für die Klassifikatoreinheit erzeugt werden, können bei Verwendung eines Algorithmus aus dem Stand der Technik sehr zahlreich sein, beispielsweise kann es mehr als 100 oder sogar mehr als 1000 Bounding-Boxen pro Abbildung oder Bilddatensatz geben. Um nicht zu allen Bounding-Boxen einen Merkmalsvektor zu berechnen und diesen mit den statistischen Verteilungsmodellen vergleichen zu müssen, sieht eine Weiterentwicklung vor, dass solche Bounding-Boxen ausgeschlossen werden, für die ohnehin durch die Klassifikatoreinheit erkannt wird, dass sie einen Passanten abbilden. Es wird also das Detektionsergebnis oder das Erkennungsergebnis der Klassifikatoreinheit ausgeschlossen, weil dort kein Passant übersehen worden sein kann. Zudem werden auch solche Bounding-Boxen ausgeschlossen, für die erkannt wird, dass sie sich mit einer Bounding-Box, die gemäß der Klassifikatoreinheit einen Passanten abbildet, um mehr als einen vorgegebenen Mindestanteil flächenmäßig überschneiden. Der Mindestanteil kann in einem Bereich von 80 Prozent bis 99 Prozent liegen. Dies beruht auf der Erkenntnis, dass Algorithmen aus dem Stand der Technik, durch die Bounding-Boxen ermittelt werden, zu einem einzelnen Passant auch mehrere, gegeneinander versetzte Bounding-Boxen ausgegeben oder signalisiert werden. All diese Bounding-Boxen können ausgeschlossen werden, wenn zu einer davon durch die Klassifikatoreinheit signalisiert wird, dass ein Passant darin abgebildet ist.

Um dabei aber zu verhindern, dass durch die Klassifikatoreinheit eineinzelner Passant signalisiert wird, dahinter aber ein zweiter, teilweise verdeckter Passant übersehen wird, kann auch eine Differenzbildung vorgesehen sein, die von einer Bounding-Box denjenigen Flächenanteil subtrahiert oder entfernt, der zu einer Bounding-Box mit erkanntem Passanten gehört. Mit anderen Worten wird ein Überlapp entfernt, der sich zwischen einer Bounding-Box mit Passant und einer weiteren Bounding-Box (für die noch kein Passant erkannt wurde) ergibt. Der nicht-überlappende Teil wird dann durch zumindest eine weitere Bounding-Box beschrieben. Es kann notwendig sein, mehrere weitere Bounding-Boxen zu definieren, wenn die Bounding-Boxen eine vorgegebene Grundform aufweisen müssen, beispielsweise oder insbesondere eine Rechteck-Form. Somit kann auch hinter einem erkannten oder detektierten Passant noch der sichtbare Teilbereich einer ansonsten verdeckten weiteren Passant mittels der Verteilungsmodelle detektiert werden.

Besonders bevorzugt ist gemäß einer Weiterentwicklung vorgesehen, dass die dimensionsreduzierende Abbildung eine Transformation des temporären Vektors mittels einer Hauptkomponentenanalyse umfasst. Hierdurch ergeben sich als transformierter Vektor sogenannte Hauptkomponenten. Für die Dimensionsreduzierung wird dann aus dem transformierten Vektor nur eine vorbestimmte Teilanzahl der Vektorkomponenten, also weniger als alle Vektorkomponenten, für den Merkmalsvektor verwendet. Insbesondere werden die ersten N Hauptkomponenten verwendet (N eine ganze Zahl). Somit kann beispielsweise eine Anzahl N der Vektorkomponenten des Merkmalsvektors auf weniger als 200, insbesondere weniger als 100, reduziert werden.

Wie bereits ausgeführt, ist für die Klassifikatoreinheit damit zu rechnen oder ist dieser inhärent, dass sie eine Detektionsschwelle für Passanten aufweist, die angibt, zu wie viel Prozent oder mit welchem Anteil der Passant in der Bounding-Box sichtbar sein muss, damit die Klassifikatoreinheit der Passant überhaupt detektieren kann. Jedes der Verteilungsmodelle wird bevorzugt derart ausgelegt, dass es einen solchen Teilbereich modelliert, der unterhalb der Detektionsschwelle liegt. Somit kann mittels des Verteilungsmodells eine Abbildung eines Teilbereichs eines Passanten als zu einem Passant gehörig erkannt werden, für den die Klassifikatoreinheit aufgrund ihrer Detektionsschwelle keine Detektion durchführen kann. Das jeweilige Verteilungsmodell kann hierzu mit entsprechendem Merkmalsvektor von Abbildungen von Teilbereichen des Passanten modelliert werden. Dies kann in an sich bekannter Weise auf der Grundlage von Histogrammen entsprechend vieler Merkmalsvektoren aus Trainingsdatensätzen erfolgen, wie diese im Weiteren noch beschrieben werden.

Um einen geeigneten Abgriffspunkt oder eine geeignete Stelle zum Erzeugen oder zum Extrahieren von Merkmalsdaten der Bildmerkmale zu erhalten, sieht eine Weiterentwicklung vor, dass als Merkmalsextraktionseinheit ein Faltungsnetzwerk (CNN - Convolutional Neuronal Network) als künstliches neuronales Netzwerk verwendet wird. Mittels einer solchen Merkmalsextraktionseinheit können in einer Abbildung oder in Pixeln eines Abbilds einer Umgebung solche zusammengehörigen Pixel detektiert werden, die insgesamt ein jeweiliges Muster oder eine jeweilige Struktur repräsentieren, beispielsweise Kanten und/oder Regionen einer bestimmten Farbe oder eines bestimmten Farbmusters und/oder Grundformen, wie beispielsweise Winkel oder Ecken oder Augenpaare, um nur Beispiele zu nennen. Das CNN enthält entsprechende Filter, mittels welche durch Korrelation das Muster oder die Struktur in der Abbildung verortet werden kann.

Als Klassifikatoreinheit kann einer solchen Merkmalsextraktionseinheit ein tiefes künstliches neuronales Netzwerk, DNN (Deep Neuronal Network), nachgeschaltet sein, wie dies gemäß einer Weiterentwicklung vorgesehen ist. Ein solches DNN wird auch als FCNN (Fully Connected Neuronal Network) bezeichnet. Es ordnet den jeweiligen extrahierten Merkmalsdaten eine Detektionsklasse oder ein Detektionsergebnis zu, beispielsweise die Aussage, ob oder zu wie viel Prozent Wahrscheinlichkeit die Gruppe der Merkmalsdaten in einer Bounding-Box einen Passant repräsentiert.

Das Training von Faltungsnetzwerken und/oder tiefen künstlichen neuronalen Netzwerken kann mit einem an sich aus dem Stand der Technik bekannten Algorithmus durchgeführt werden, beispielsweise dem Backpropagation-Algorithmus. Hierzu wird auf die eingangs beschriebenen Veröffentlichungen aus dem Stand der Technik verwiesen.

Als Merkmalsdaten, die die extrahierten Bildmerkmale repräsentieren oder beschreiben, werden aus der Merkmalsextraktionseinheit gemäß einer Weiterentwicklung die Aktivierungswerte von künstlichen Neuronen zumindest einer Netzwerkschicht der Merkmalsextraktionseinheit verwendet oder ermittelt. Ein solcher Aktivierungswert ist in an sich bekannter Weise (abhängig von der jeweiligen wissenschaftlichen Terminologie) der Eingangswert oder Ausgangswert einer Aktivierungsfunktion (beispielsweise eine Sigmoid-Funktion) des jeweiligen künstlichen Neurons. Ein solcher Aktivierungswert repräsentiert an einer Ausgangsschicht oder in den letzten oder hinteren Schichten einer Merkmalsextraktionseinheit jeweils bereits ein vollständiges oder ein ganzes Bildmerkmal, beispielsweise eine einfarbige Fläche oder eine Kante, um nur Beispiele zu nennen. Insbesondere können die Merkmalsdaten in einem Bereich abgegriffen oder ausgelesen werden, der bei einem Modell des maschinellen Lernens aus CNN und DNN als "Bottleneck" (Flaschenhals) bezeichnet wird, also dem Übergangsbereich oder die Schnittstelle zwischen diesen beiden Netzwerken.

Wird mittels der statistischen Verteilungsmodelle zu einer Bounding-Box erkannt, dass darin noch ein undetektierter Passant, also ein nur teilweise abgebildeter Passant, abgebildet ist, so wird für diesen Fall, dass der undetektierte Passant signalisiert wird, eine vorbestimmte Sicherungsmaßnahme in dem Kraftfahrzeug ausgelöst. Mit anderen Worten kann die Signalisierung des undetektierten Passanten mit einer solchen Sicherungsmaßnahme verknüpft oder gekoppelt sein. Als Sicherungsmaßnahme kann beispielsweise vorgesehen sein, dass durch die automatisierte Fahrfunktion, welche das Detektionsergebnis betreffend Passanten empfängt, eine Fahrgeschwindigkeit des Kraftfahrzeugs reduziert und/oder eine geplante Fahrtrajektorie dahingehend anpasst oder überprüft, ob sie zu dem undetektierten Passanten hinweist und gegebenenfalls das Kraftfahrzeug durch Anpassen der Fahrtrajektorie um den undetektierten Passanten herumführt.

Damit das Verfahren durchgeführt werden kann, sind die beschriebenen statistischen Verteilungsmodelle notwendig. Diese können in der bereits beschriebenen Weise auf der Grundlage von Histogrammen zu Merkmalsvektoren erzeugt werden, die lediglich teilweise oder zu einem Teilbereich abgebildete Personen zeigen. Um solche Histogramme systematisch zu erzeugen, sieht eine Weiterentwicklung vor, dass zum Erzeugen der Verteilungsmodelle aus Trainingsdatensätzen (also Abbildungen von Umgebungen mit Passanten) Bounding-Boxen von vollständig abgebildeten Personen in Teilbereiche zerlegt werden und die in dem jeweiligen Teilbereich enthaltenen Bildmerkmale zu jeweiligen Trainings-Merkmalsvektoren zusammengefasst werden. Hierbei kann auch die bereits beschriebene dimensionsreduzierende Abbildung, z.B. die PCA, genutzt werden. Insbesondere werden die Trainings-Merkmalsvektoren in derselben Weise gebildet wie die bereits beschriebenen Merkmalsvektoren, wie sie im Betrieb der Personendetektion genutzt werden, damit gleichartige Merkmalsvektoren entstehen. Durch die Trainings-Merkmalsvektoren ergeben sich in dem beschriebenen Merkmalsraum Punktwolken oder es ergibt sich eine Punktwolke. Die Trainings-Merkmalsvektoren, beziehungsweise deren Punkte im Merkmalsraum, werden mittels eines Cluster-Algorithmus in Cluster eingeteilt. Beispielsweise kann hierzu der K-Means-Algorithmus verwendet werden. Cluster können aber beispielsweise auch mittels einer SVM (Support Vector Machine) Regionen ermittelt werden. Jedes Cluster repräsentiert oder stellt dabei eines der beschriebenen statistischen Verteilungsmodelle dar. Wird also während der Personendetektion zu einer Bounding-Box detektiert, dass deren Merkmalsvektor einen Abstand oder eine Distanz zu einem der Cluster oder einem Cluster-Mittelpunkt aufweist, der kleiner als der besagte Schwellenwert ist, so wird dieser Merkmalsvektor also dem Cluster zugeordnet und damit entschieden, dass durch den Merkmalsvektor und damit durch die Bounding-Box ein Teilbereich einer Person abgebildet ist. Andernfalls stellt der Merkmalsvektor einen undetektieren Passanten dar. So kann beispielsweise ein einzelnes Bein oder ein Beinpaar oder ein Kopf durch jeweils ein Cluster repräsentiert sein. Somit ist auch eine Detektion oder zumindest ein Hinweis auf eine undetektierte Person erzeugbar.

Um das Verfahren auszuführen, umfasst die Erfindung auch die beschriebene Prozessorschaltung für ein Kraftfahrzeug. Die Prozessorschaltung kann durch ein Steuergerät oder einen Verbund aus mehreren Steuergeräten in dem Kraftfahrzeug realisiert werden. Die Prozessorschaltung ist dazu eingerichtet, eine Ausführungsform des erfindungsgemäßen Verfahrens durchzuführen. Die Prozessorschaltung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessorschaltung Programmcode aufweisen, der dazu eingerichtet ist, bei Ausführen durch die Prozessorschaltung die Ausführungsform des erfindungsgemäßen Verfahrens durchzuführen. Der Programmcode kann in einem Datenspeicher der Prozessorschaltung gespeichert sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Um eine herkömmliche Prozessorschaltung eines Kraftfahrzeugs dahingehend zu ertüchtigen, dass sie das Verfahren ausführen kann, ist durch die Erfindung auch ein computerlesbares Speichermedium bereitgestellt, welches Programminstruktionen aufweist, die bei Ausführen durch eine Prozessorschaltung eines Kraftfahrzeugs diese veranlassen, eine Ausführungsform des erfindungsgemäßen Verfahrens betreffend die Passantendetektion im Kraftfahrzeug durchzuführen. Ein weiteres beanspruchtes computerlesbares Speichermedium weist Programminstruktionen auf, die bei Ausführen durch einen Computer, wie er beispielsweise bei einem Hersteller von Steuergeräten für Kraftfahrzeuge und/oder in einem Labor oder in einer Werkstatt stehen kann oder wie er durch ein Backend realisiert sein kann, diesen Computer veranlassen, die beschriebene Ermittlung von Trainings-Merkmalsvektoren und daraus Clustern gemäß dem beschriebenen Verfahren durchzuführen. Ein solches computerlesbares Speichermedium kann somit genutzt werden, um in einem Labor oder bei einem Hersteller die statistischen Verteilungsmodelle zu erzeugen, die dann in einer Prozessorschaltung des Kraftfahrzeugs zum Durchführen des beschriebenen Verfahrens genutzt werden können.

Die Erfindung umfasst auch ein Kraftfahrzeug, bei welchem eine Ausführungsform der beschriebenen Prozessorschaltung mit zumindest einem Umgebungsvektor des Kraftfahrzeugs zum Empfangen von Bilddatensätzen und mit einer automatisierten Fahrfunktion zum Bereitstellen von Detektionsergebnissen an diese Fahrfunktion gekoppelt ist. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Als eine weitere Lösung umfasst die Erfindung auch ein computerlesbares Speichermedium, umfassend Programmcode, der bei der Ausführung durch einen Computer oder einen Computerverbund diesen veranlassen, eine Ausführungsform des erfindungsgemäßen Verfahrens auszuführen. Das Speichermedium kann z.B. zumindest teilweise als ein nicht-flüchtiger Datenspeicher (z.B. als eine Flash-Speicher und/oder als SSD - solid state drive) und/oder zumindest teilweise als ein flüchtiger Datenspeicher (z.B. als ein RAM - random access memory) bereitgestellt sein. Das Speichermedium kann in der Prozessorschaltung in deren Datenspeicher realisiert sein. Das Speichermedium kann aber auch beispielsweise als sogenannter Appstore-Server im Internet betrieben sein. Durch den Computer oder Computerverbund kann eine Prozessorschaltung mit zumindest einem Mikroprozessor bereitgestellt sein. Der Programmcode kann als Binärcode oder Assembler und/oder als Quellcode einer Programmiersprache (z.B. C) und/oder als Programmskript (z.B. Python) bereitgestellt sein.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs;
- Fig. 2: eine Skizze zur Veranschaulichung einer Ausführungsform des erfindungsgemäßen Verfahrens.

In den Figuren bezeichnen gleiche Bezugszeichen jeweils funktionsgleiche Elemente.

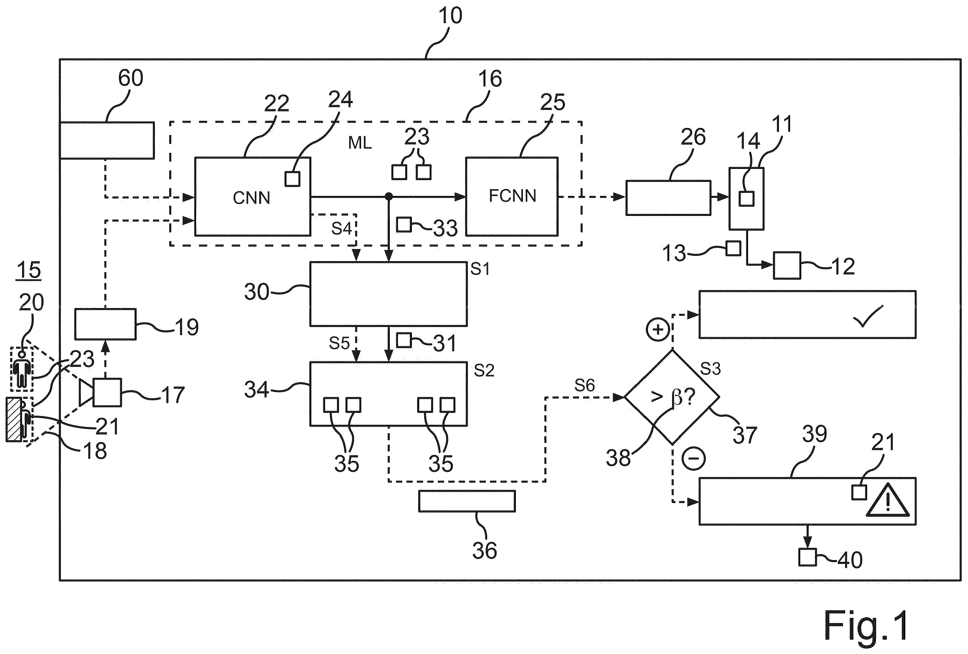

Fig. 1 zeigt ein Kraftfahrzeug 10, bei dem es sich um einen Kraftwagen, insbesondere einen Personenkraftwagen oder Lastkraftwagen, handeln kann. Das Kraftfahrzeug 10 kann eine automatisierte Fahrfunktion 11 aufweisen, durch welche automatisiert oder ohne ein Zutun eines Fahrers eine Aktuatorik 12 des Kraftfahrzeugs 10 mittels eines Steuersignals 13 angesteuert werden kann. Die Aktuatorik 12 kann zur Querführung (Lenken) und/oder Längsführung (Beschleunigen und Bremsen) des Kraftfahrzeugs 10 vorgesehen sein. Mittels des Steuersignals 13 kann damit die Fahrfunktion 11 das Kraftfahrzeug 10 durch Ansteuern der Aktuatorik 12 entlang einer Fahrtrajektorie 14 führen, die die Fahrfunktion 11 berechnen kann, um das Kraftfahrzeug 10 kollisionsfrei durch eine Umgebung 15, beispielsweise einen Straßenverkehr oder ein Straßennetz, zu führen. Um die Fahrtrajektorie 14 zu planen, kann der Fahrfunktion 11 eine Passantendetektion 16 vorgeschaltet sein, die durch ein Modell des maschinellen Lernens ML durchgeführt werden kann.

Die Passantendetektion 16 kann aus zumindest einem Umgebungssensor 17 des Kraftfahrzeugs 10, beispielsweise eine Kamera, dessen Erfassungsbereich 18 in die Umgebung 15 ausgerichtet sein kann, Bilddatensätze 19 empfangen, die jeweils die Umgebung 15 mit darin potentiell sichtbaren Personen oder Passanten 20, 21 abbilden können.

Das ML-Modell kann eine Merkmalsextraktionseinheit 22 aufweisen, die beispielsweise auf einem Faltungsnetzwerk CNN basieren kann. Mittels der Merkmalsextraktionseinheit 22 können Bildmerkmale aus den Bilddatensätzen 19 extrahiert werden, wie dies an sich für Faltungsnetzwerke oder allgemein für die Computer-Vision-Verarbeitung von Bilddatensätzen 19 bekannt ist. Zusätzlich oder alternativ dazu können anhand der Bilddatensätze 19 Bounding-Boxen 23 ermittelt werden, die solche Regionen oder Bildbereiche der Abbildungen gemäß den Bilddatensatz 19 abgrenzen oder umrahmen, in denen sich gemäß den merkmalextrahierten Bildmerkmalen 24 eine Person als Passanten 20, 21 befinden könnte. Dies sind sogenannte Hypothesen oder Vorschläge. Die Bilddaten der einzelnen Bounding-Boxen 23 können einer Klassifikatoreinheit 25 bereitgestellt sein, die beispielsweise auf einem FCNN (Fully Connected Neuronal Network) beruhen kann. Die Klassifikatoreinheit 25 kann auf Grundlage der Bildmerkmale 24 aus den einzelnen Bounding-Boxen 23 ein Erkennungsergebnis 26 in an sich bekannter Weise erzeugen, das angibt, welche der Bounding-Boxen 23 tatsächlich eine Person als Passant 20, 21 befindet.

Im Folgenden sei für die weitere Erläuterung angenommen, dass durch die Klassifikatoreinheit 25 der vollständig sichtbare Passant 20 detektiert werden kann, die in dem jeweiligen Bilddatensatz 19 vollständig zu sehen oder abgebildet ist. Dagegen ist der Passant 21 lediglich teilweise oder nur ein Teilbereich des Passanten 21 abgebildet und wurde in dem Beispiel von der Klassifikatoreinheit 25 übersehen oder nicht detektiert. Ein Passant ist in diesem Ausführungsbeispiel eine Person.

Das Detektionsergebnis oder das Erkennungsergebnis 26 der Detektion kann der Fahrfunktion 11 signalisiert werden. Die Fahrfunktion 11 kann anhand der Position des detektierten Passanten 20 in der Abbildung gemäß Bilddatensatz 19 eine relative Position des Passanten 20 in der Umgebung 15 bezüglich des Kraftfahrzeugs ermitteln und daraufhin die Fahrtrajektorie 14 planen.

Um zu überprüfen, ob die Klassifikatoreinheit 25 einen Passanten übersehen hat, beispielsweise der Passant 21, kann zusätzlich zu solchen Bounding-Boxen 23, die keinen der detektierten Passenten 20, 21 umrahmen oder abdecken, mittels einer dimensionsreduzierenden Abbildung 30 ein jeweiliger Merkmalsvektor 31 ermittelt werden. Hierzu können beispielsweise die Bildmerkmale 24 der jeweiligen Bounding-Box 23 zu einem vorläufigen Vektor 33 zusammengefasst werden, der mittels der Abbildung 30 in seiner Dimension oder Länge reduziert werden kann, um den Merkmalsvektor 31 zu erzeugen. Als Abbildung 30 kann beispielsweise eine Hauptkomponentenanalyse PCA (Principal Compound Analysis) verwendet werden

Der Merkmalsvektor 31 kann in einer Distanzberechnung 34 mit statistischen Verteilungsmodellen 35 verglichen werden oder es kann ein Zugehörigkeitswert oder ein Wert für eine Auftrittswahrscheinlichkeit gemäß dem jeweiligen statistischen Verteilungsmodell 35 zu dem Merkmalsvektor 31 ermittelt werden. Daraus kann ein jeweiliger Distanzwert 36 des Merkmalsvektors 31 bezüglich des statistischen Verteilungsmodells 35 ermittelt werden. Der kleinste Distanzwert 36 kann weiter benutzt werden, da insbesondere nur der kleinste Distanzwert 36 für die weiteren Verfahrensschritte genutzt werden braucht. Beispielsweise kann als Distanzwert 36 der Kehrwert eines Wahrscheinlichkeitswerts verwendet werden, der eine Auftrittswahrscheinlichkeit des Merkmalsvektors 31 gemäß dem jeweiligen statistischen Verteilungsmodell 35 ergibt. Als statistisches Verteilungsmodell 35 kann beispielsweise eine Gauß-Kernel-Verteilungsfunktion verwendet werden, die zu einem Merkmalsvektor 31 eine Auftrittswahrscheinlichkeit angeben kann. Wird als statistisches Verteilungsmodell 35 eine Support-Vector-Machine, SVM, verwendet, so ergibt sich als Detektionsergebnis ein binärer Distanzwert (zugehörig oder nicht-zugehörig).

In einem Schwellenwertvergleich 37 kann der Distanzwert 36 mit einem Schwellenwert 38 verglichen werden, der hier als der griechische Buchstabe β angegeben ist. Ist der Distanzwert größer als der Schwellenwert 38 (symbolisiert durch ein Plus-Symbol), so gibt es keine Übereinstimmung der geprüften Bounding-Box gemäß Merkmalsvektor 31 zu einem der statistischen Verteilungsmodelle 35 und somit repräsentiert die Bounding-Box auch keinen Teilbereich eines Passanten (symbolisiert durch ein "OK-Häkchen").

Ist dagegen in dem Schwellenwertvergleich 37 der Distanzwert 36 kleiner als der Schwellenwert 38 (symbolisiert durch ein Minus-Symbol), so kann eine Signalisierung 39 vorsehen, dass ein undetektierter oder übersehener Passant in dem Bilddatensatz 19, der den Bounding-Boxen zugrundeliegt, vorhanden ist. Durch die Signalisierung 39 kann beispielsweise die beschriebenen Sicherungsmaßnahme 40 ausgelöst werden, das heißt beispielsweise kann die Fahrfunktion 11 die Fahrgeschwindigkeit des Kraftfahrzeugs 10 entgegen der bisher geplanten Fahrtrajektorie 14 reduzieren oder sicherstellen, dass die Fahrgeschwindigkeit unter einem vorgegebenen Höchstgeschwindigkeitswert gehalten wird.

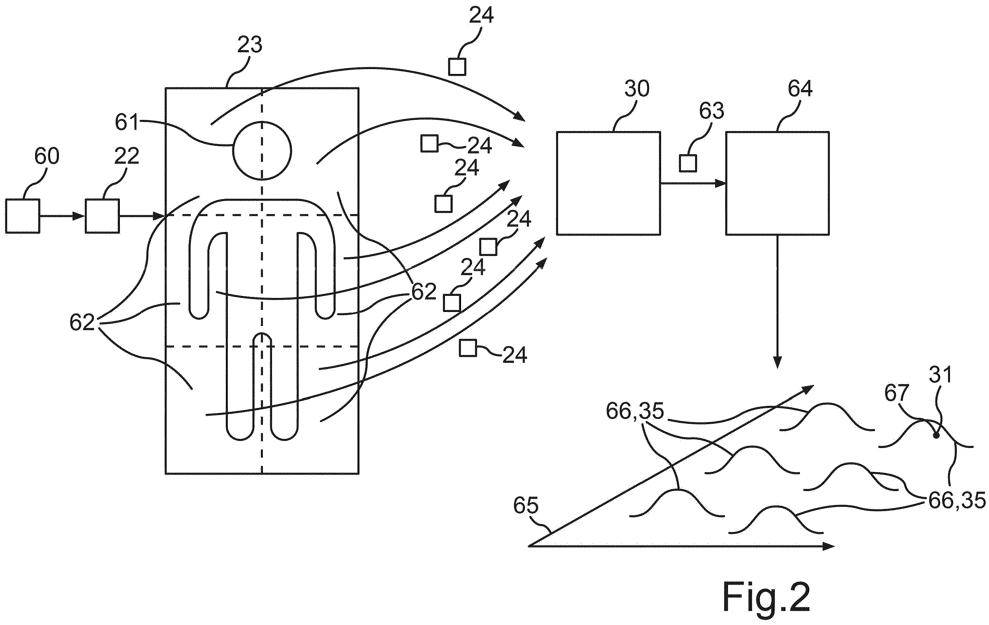

Fig. 2 veranschaulicht beispielhaft, wie die Verteilungsmodelle 35 gebildet werden können und wie anhand des Merkmalsvektors 31 mittels der Verteilungsmodelle 35 der undetektierte Passant 21 ermittelt werden kann.

Fig. 2 stellt dazu (mit Rückbezug auf Fig. 1) dar, wie Trainingsdatensätze 60 (Fig. 1) in derselben Weise analysiert werden können mittels der Merkmalsextraktionseinheit 22, wie dies bereits beschrieben wurde. Die Trainingsdatensätze 60 können dabei in der an sich bekannten Weise mit Labeling-Daten versehen sein, das heißt es kann bekannt sein, welche Bounding-Box 23 eine vollständig sichtbare Person 61 als Passant darstellt oder abbildet. Eine solche Bounding-Box 23 kann in Teilbereiche 62 eingeteilt oder zerlegt werden, das heißt die Bildmerkmale innerhalb der Bounding-Box 23 können dem jeweiligen Teilbereich 62 zugeordnet werden. Aus dem Stand der Technik ist bekannt, dass einem Bildmerkmal 24 auch ein Ort oder eine Position innerhalb eines Abbilds in einem Bilddatensatz 19 zugeordnet ist.

Die Bildmerkmale 24 jedes Teilbereichs 62 können nun in der beschriebenen Weise mittels der dimensionsreduzierenden Abbildung in Trainings-Merkmalsvektoren 63 abgebildet oder umgewandelt werden. Die Trainings-Merkmalsvektoren 63 können mittels eines Clustering-Algorithmus 64 oder Cluster-Algorithmus zusammengefasst werden. Hierdurch ergeben sich in einem Merkmalsraum 65 mehrere Cluster 66, von denen jedes ein Verteilungsmodell 35 repräsentiert. Der Merkmalsraum 65 ist hier beispielhaft und für die Beschreibung vereinfachend durch einen zweidimensionalen Raum (Ebene) dargestellt. Zu einzelnen Bereichen oder für einzelne Punkte im Merkmalsraum 65 kann durch das jeweilige Verteilungsmodell 35 angegeben werden, ob und/oder mit welcher Wahrscheinlichkeit ein solcher Punkt im Merkmalsraum 65 zu dem Verteilungsmodell 35 gehört oder durch dieses hervorgerufen oder erzeugt wird.

Wird beispielsweise zu dem Passanten 21 dessen Bounding-Box 23 in den Merkmalsvektor 31 überführt oder umgewandelt, so stellt dieser Merkmalsvektor 31 einen Punkt 67 im Merkmalsraum 65 dar, der einen Distanzwert 36 zu dem Verteilungsmodell 35 aufweist, der kleiner als der Schwellenwert 38 ist. Entsprechend kann der Punkt 67 zu dem Verteilungsmodell 35, das heißt dessen Cluster 66, gehörig ermittelt werden. Damit ergibt sich bei dem Schwellenwertvergleich 37, dass ein undetektierter Passant 21 vorliegt und damit die Signalisierung 39 ausgelöst oder gestartet werden muss.

Damit erhält man insgesamt eine Zuverlässigkeitsmetrik ein, um die verdeckten Datenpunkte zu finden, die auf ihrem Abstand zum Massenschwerpunkt oder geometrischen Zentrum der der Cluster aus den Trainingsdaten beruhen.

Darauf aufbauend ergibt sich ein im Fahrzeug installiertes System, das ein Referenz-Clustermodell verwendet, das im Backend auf der Grundlage des für die Optimierung des DNN (allgemein der Klassifikatoreinheit) verwendeten Trainingsdatensatzes erstellt wurde, um zu prüfen, ob das aktuell verarbeitete Bild verdeckte Fußgänger enthält.

In jeder Phase der Wahrnehmung und Entscheidungsfindung, in der DNNs Vorhersagen treffen, ist die Zuverlässigkeit solcher Vorhersagen für das automatisierte Fahrsystem insgesamt von entscheidender Bedeutung, da die anstehenden Entscheidungen des Systems von diesen Zuverlässigkeitswerten beeinflusst werden können. Mit anderen Worten: Wenn sich eine Vorhersage eines Teilsystems, z. B. der Wahrnehmung, als unzuverlässig erweist, muss das System alternative Entscheidungen treffen, anstatt der unsicheren Entscheidungen, da sonst die Sicherheit der Fahrgäste oder anderer Verkehrsteilnehmer gefährdet werden kann. Im Fall dieses Patents prüft dieser Algorithmus die Möglichkeit, dass ein verdeckter Fußgänger vom DNN übersehen wird.

Der Stand der Technik basiert bisher auf rechenintensiven Methoden, die bei den begrenzten Ressourcen in den Einsatzgeräten, wie z.B. Fahrzeugen, nicht immer leicht anwendbar sind. Andererseits sind ihre Vorhersagen irreführend, wenn es um ungünstige Störungen geht, bei denen sie immer noch ein hohes Vertrauen für die falsch vorhergesagten Datenpunkte liefern. Unsere Methode basiert auf leichtgewichtigen statistischen Modellen, die nur einen Bruchteil der Rechenleistung benötigen, die das Haupt-DNN benötigt, und somit die Effizienz des gesamten Erkennungssystems nicht beeinträchtigen. Da die Methode auf statistischen Analysemethoden basiert, können die Systemingenieure außerdem Entscheidungsgrenzen festlegen, um sich nur auf einen bestimmten Bereich gültiger Erkennungen zu verlassen und den Rest als unzuverlässig zu betrachten. Dies hilft insbesondere bei der Festlegung zuverlässiger und sicherer Entscheidungsbereiche, innerhalb derer das DNN gute Leistungen erbringen kann.

Darüber hinaus kann unsere Methode auch für die Sicherheitsargumentation von Wahrnehmungs-DNNs verwendet werden, wobei die DNNs auf einer Vielzahl von Eingabedatenpunkten mit Abständen von ihren wahren Klassenclusterzentren evaluiert werden und darauf basierend Beweise generiert werden können.

Eine Übersicht über eine besonders bevorzugte Ausführungsform der Methode wie folgt. Die Figuren zeigen, das Verfahren entscheidet, ob eine Vorhersage des automatisierten Fahrsystems im Fahrzeug zuverlässig ist oder nicht. Die Entscheidung, ob eine Vorhersage des automatisierten Fahrsystems im Fahrzeug zuverlässig ist oder nicht, wird in den folgenden sechs Schritten getroffen. Die Schritte S1 bis S3 werden während der Entwurfszeit des Systems im Backend durchgeführt, während die Schritte S4 bis S6 während der Laufzeit im Fahrzeug durchgeführt werden, was eine minimale Rechenleistung erfordert. Die Schritte insbesondere sind wie folgt:
(1) [Im Backend] werden die Aktivierungen einer oder mehrerer CNN-Schichten (oder eines ähnlichen Encoders) für den gesamten Trainingsdatensatz für die vollständig sichtbaren Fußgänger extrahiert. Diese werden dann in verschiedene zufällige Splits aufgeteilt, um jeweils einen Teilbereich der Fußgänger abzudecken. Anschließend wird jeder Split mit linearen Dimensionalitätsreduktionsmethoden wie der Hauptkomponentenanalyse (PCA) vereinfacht, was einen vereinfachten Merkmalsraum ergibt, der in verschiedene Klassen eingeteilt werden kann. Aufgrund seiner Linearität ist dieses Modell sehr klein und leicht, so dass es nur minimale Rechenleistung erfordert. Folglich werden am Ende dieses Schritts viele statistische Verteilungen extrahiert, die auf verschiedenen Unterteilungen der Fußgänger extrahiert, die als Referenz für die nächsten Schritte verwendet werden.
(2) [Im Backend] Auf der Grundlage der Ergebnisse aus (1) wird ein Modell entwickelt, das für jeden Split ein Cluster bildet. Dies wird dann verwendet, um einen Wahrscheinlichkeitsscore zu schätzen, der die Wahrscheinlichkeit definiert, dass ein Datenpunkt zu einem Cluster gehört. Dieser Wahrscheinlichkeitswert wird so berechnet, dass das Fahrzeug möglichst wenig Rechenleistung benötigt.
(3) [Im Backend] wird, falls für die Clustermethode erforderlich, für jedes Cluster ein Wahrscheinlichkeitsschwellenwert definiert der die Mindestwahrscheinlichkeit darstellt, mit der ein Datenpunkt zu diesem Cluster gehört oder nicht.
(4) [Im Fahrzeug] Bei den üblichen 2D-Objekterkennungsmethoden werden Tausende von 2D-"Vorschlägen" erzeugt die in den späteren Phasen der Erkennung unterdrückt werden und von denen nur wenige zum endgültigen Ergebnis führen. Unser Algorithmus verwendet diese vielen 2D-Vorschläge, um die entsprechenden Filteraktivierungen aus der oben erwähnten CNN-Schicht zu extrahieren. Anschließend werden diese Vorschläge in die engere Auswahl genommen, um diejenigen auszuschließen, die sich mit einem bereits vom Haupt-DNN erkannten Fußgänger überschneiden. (Ziel ist es, die übersehenen verdeckten Fußgänger zu finden). Schließlich werden sie in den neuen Raum übertragen durch dasselbe PCA-Modell wie in (1) übertragen und mit den in (2) gebildeten Clustern verglichen.
(5) [Im Fahrzeug] wird der Wahrscheinlichkeitswert der Ergebnisse aus (4) in Bezug auf die aufgeteilten Cluster geschätzt und der nächstliegende Cluster wird zurückgegeben.
(6) [Im Fahrzeug] Wenn der in Schritt S5 geschätzte Wahrscheinlichkeitswert kleiner ist als der in Schritt S3 berechnete Schwellenwert, dann wird die endgültige Vorhersage als "ein wahrscheinlich verdeckter Fußgänger, der vom Hauptfußgängerdetektor übersehen wird" betrachtet.

Insgesamt zeigen die Beispiele, wie für eine automatisierte Fahrfunktion bei einer Passantendetektion eine zusätzliche Überprüfung auf übersehene oder undetektierte Passanten bereitgestellt werden kann, die auf Clustern (Verteilungsmodellen) in einem reduzierten Merkmalsraum beruhen kann und damit mit geringem Berechnungsaufwand durchgeführt werden kann.

## Patentansprüche

1. Verfahren zum Betreiben einer Verkehrsobjektdetektion (16) in einer Prozessorschaltung eines Kraftfahrzeugs (10), wobei zumindest ein Bilddatensatz (19), der eine jeweilige Abbildung (30) einer Umgebung (15) des Kraftfahrzeugs (10) beschreibt, aus zumindest einem Umgebungssensor (17) empfangen wird,
und mittels zumindest eines Modells des Maschinellen Lernens, ML-Modell, anhand des jeweiligen Bilddatensatzes (19)
• in der Abbildung (30) Bounding-Boxen (23) mit potentiellen Abbildern von Verkehrsobjekten (20, 21) ermittelt werden und
• aus Bilddaten des Bilddatensatzes (19) mittels einer Merkmalsextraktionseinheit (22) des zumindest einen ML-Modells Merkmalsdaten von Bildmerkmalen (24) extrahiert werden und
• innerhalb der jeweiligen Bounding-Box (23) anhand der darin enthaltenen Bildmerkmale (24) mittels einer Klassifikatoreinheit (25) des zumindest einen ML-Modells jeweils eine Detektion eines vollständig oder zu mehr als einem vorgestimmten Mindestanteil, abgebildet ist, wobei der Mindestanteil in einem Bereich von 65 bis 90 Prozent liegt, abgebildeten Verkehrsobjekts (20, 21) durchgeführt wird und als ein Ergebnis der Detektion die jeweilige ein Verkehrsobjekt (20, 21) abbildende Bounding-Box (23) durch ein Detektionssignal identifiziert wird, wobei das Detektionssignal eine ID der Bounding-Box(23) und/oder Koordinaten angibt,
**dadurch gekennzeichnet, dass**
• für durch Differenzbildung gebildete weitere Bounding-Boxen (23) jeweils die darin enthaltenen Bildmerkmale (24) zu einem Merkmalsvektor (31) zusammengefasst werden, wobei bei der Differenzbildung von einer Bounding-Box (23) derjenige Flächenanteil subtrahiert oder entfernt wird, der zu einer Bounding-Box (23) mit mittels der Klassifikatoreinheit (25) erkanntem Verkehrsobjekt (20, 21) gehört, und
• ein jeweiliger Distanzwert (36) des Merkmalsvektors (31) zu mehreren statistischen Verteilungsmodellen (35), von denen jedes eine statistische Verteilung solcher Bildmerkmale (24) von nur einem jeweiligen Teilbereich (62) eines Verkehrsobjekts (20, 21) und/oder eines Körpers einer Person modelliert, ermittelt wird, wobei mit "Teilbereich" (62) hierbei gemeint ist, dass die Verteilungsmodelle (35) auf solchen Merkmalsvektoren beruhen, die eine nicht-überwiegende Abbildung des Verkehrsobjekts (20, 21) oder eines Passanten darstellen, also nur ein einzelnes Körperteil oder eine Verdeckung des Verkehrsobjekts (20, 21) oder Passanten von mehr als einem solchen "Okklusionsanteil" darstellen, der in einem Bereich von 25 Prozent bis 80 Prozent liegt und
• der Distanzwert (36) mit einem vorgegebenen Schwellenwert (38) verglichen wird und,
• falls gemäß dem Vergleich der Distanzwert (36) zu einem der statistischen Verteilungsmodelle (35) kleiner als der Schwellenwert (38) ist, signalisiert wird, dass durch die Klassifikatoreinheit (25) ein Verkehrsobjekt (20, 21) undetektiert geblieben ist; ist nämlich der Distanzwert kleiner als der Schwellenwert, so besteht eine entsprechend große Ähnlichkeit oder Zugehörigkeit des Merkmalsvektors zu dem Verteilungsmodell (35), das heißt der Merkmalsvektor repräsentiert mit einer entsprechend großen Wahrscheinlichkeit einen Teilbereich (2) eines Verkehrsobjekts (20, 21) oder Körperbereichs einer Person und/oder eines menschlichen Körpers,
• wobei der Merkmalsvektor (31) gebildet wird, indem die Bildmerkmale (24) zu einem temporären Vektor zusammengefasst werden und der temporäre Vektor mittels einer dimensionsreduzierenden Abbildung (30) zu dem Merkmalsvektor (31) reduziert wird.

2. Verfahren nach Anspruch 1, wobei vor dem Ermitteln des Distanzwerts (36) solche der Bounding-Boxen (23) ausgeschlossen werden, für die erkannt wird, dass sie sich mit einer Bounding-Box (23), für die durch die Klassifikatoreinheit (25) signalisiert wird, dass sie ein Verkehrsobjekt (20, 21) abbildet, um mehr als einen vorgegebenen Mindestanteil flächenmäßig überschneiden, um nicht zu allen Bounding-Boxen (23) einen Merkmalsvektor (31) zu berechnen und diesen mit den statistischen Verteilungsmodellen vergleichen zu müssen und/oder wobei die Differenzbildung umfasst, dass zumindest eine der weiteren Bounding-Boxen (23) gebildet wird, indem zu einer der Bounding-Boxen (23), die mit einer Bounding-Box (23), für die durch die Klassifikatoreinheit (25) signalisiert wird, dass sie ein Verkehrsobjekt (20, 21) abbildet, einen Überlapp aufweist, der nicht-überlappende Teil als zumindest eine weitere Bounding-Box (23) beschrieben wird, um zu verhindern, dass durch die Klassifikatoreinheit (25) ein einzelner Passant signalisiert wird, dahinter aber ein zweiter, teilweise verdeckter Passant übersehen wird.

3. Verfahren nach einem der vorhergehenden Ansprüche, wobei die dimensionsreduzierende Abbildung (30) eine Transformation des temporären Vektors mittels einer Hauptkomponentenanalyse umfasst und aus dem transformierten Vektor nur eine vorbestimmte Teilanzahl der Vektorkomponenten für den Merkmalsvektor (31) verwendet wird.

4. Verfahren nach einem der vorhergehenden Ansprüche, wobei jedes der Verteilungsmodelle einen solchen Teilbereich (62) modelliert, der unterhalb einer Detektionsschwelle der Klassifikatoreinheit (25) liegt.

5. Verfahren nach einem der vorhergehenden Ansprüche, wobei als Merkmalsextraktionseinheit (22) ein Faltungsnetzwerk, CNN, und/oder als Klassifikatoreinheit (25) ein tiefes künstliches neuronales Netzwerk, DNN, betrieben wird.

6. Verfahren nach einem der vorhergehenden Ansprüche, wobei als Merkmalsdaten aus der Merkmalsextraktionseinheit (22) Aktivierungswerte von künstlichen Neuronen zumindest einer Netzwerkschicht der Merkmalsextraktionseinheit (22) ermittelt werden.

7. Verfahren nach einem der vorhergehenden Ansprüche, wobei für den Fall, dass ein undetektiertes Verkehrsobjekt (20, 21) signalisiert wird, eine vorbestimmte Sicherungsmaßnahme (40) in dem Kraftfahrzeug (10) ausgelöst wird.

8. Verfahren nach einem der vorhergehenden Ansprüche, wobei zum Erzeugen der Verteilungsmodelle (35) aus Trainingsdatensätzen (60) Bounding-Boxen (23) von vollständig abgebildeten Verkehrsobjekten (20, 21) in die Teilbereiche (62) zerlegt werden und die in dem jeweiligen Teilbereich (62) enthaltenen Bildmerkmale (24) zu jeweiligen Trainings-Merkmalsvektoren (63) zusammengefasst werden und mittels eines Cluster-Algorithmus die ermittelten Trainings-Merkmalsvektoren (63) in Cluster (66) eingeteilt werden, wobei jedes Cluster (66) eines der statistischen Verteilungsmodelle (35) darstellt.

9. Prozessorschaltung für ein Kraftfahrzeug (10), wobei die Prozessorschaltung dazu eingerichtet ist, ein Verfahren nach einem der Ansprüche 1 bis 7 durchzuführen.

10. Computerlesbares Speichermedium aufweisend Programminstruktionen, die bei Ausführungen durch eine Prozessorschaltung diese veranlassen, ein Verfahren nach einem der Ansprüche 1 bis 7 durchzuführen oder die bei Ausführen durch einen Computer diesen veranlassen, ein Verfahren nach Anspruch 8 durchzuführen.

## Claims

1. A method for operating traffic object detection (16) in a processor circuit of a motor vehicle (10), wherein at least one image data set (19) describing relevant imaging (30) of an environment (15) of the motor vehicle (10) is received from at least one environment sensor (17),
and by means of at least one machine learning model (ML model), on the basis of the relevant image data set (19),
• determining bounding boxes (23) containing potential images of traffic objects (20, 21) in the imaging (30) and
• extracting feature data of image features (24) from image data of the image data set (19) by means of a feature extraction unit (22) of the at least one ML model;
• detecting a traffic object (20, 21) that is completely depicted or is depicted by more than a predetermined minimum fraction, the minimum fraction being in a range of 65 to 90 percent, within the respective bounding box (23) on the basis of the image features (24) contained therein by means of a classifier unit (25) of the at least one ML model, and the relevant bounding box (23) depicting a traffic object (20, 21) is identified by a detection signal as a result of the detection, the detection signal indicating an ID of the bounding box (23) and/or coordinates,
**characterized in that**,
• for further bounding boxes (23) formed by subtraction, the image features (24) contained therein are combined to form a feature vector (31) in each case, and, during the subtraction, that area portion is subtracted or removed from a bounding box (23) which belongs to a bounding box (23) containing a traffic object (20, 21) identified by means of the classifier unit (25), and
• a relevant distance value (36) of the feature vector (31) is determined to form a plurality of statistical distribution models (35), each of which models a statistical distribution of such image features (24) of only one relevant portion (62) of a traffic object (20, 21) and/or a body of a person, and in this case, "portion" (62) means that the distribution models (35) are based on those feature vectors which represent nonpredominant imaging of the traffic object (20, 21) or a pedestrian, i.e. represent only a single body part or obscuring of the traffic object (20, 21) or pedestrian by more than such an "occlusion fraction", which may be in a range of 25 percent to 80 percent, and
• comparing the distance value (36) with a predetermined threshold value (38) and,
• if, according to the comparison, the distance value (36) for one of the statistical distribution models (35) is less than the threshold value (38), it is indicated that a traffic object (20, 21) has gone undetected by the classifier unit (25); if the distance value is namely less than the threshold value, there is an accordingly high level of similarity or affiliation of the feature vector with the distribution model (35), i.e. the feature vector represents, with an accordingly high probability, a portion (2) of a traffic object (20, 21) or bodily region of a person and/or a human body,
• the feature vector (31) being formed by the image features (24) being combined to form a temporary vector and the temporary vector being reduced to form the feature vector (31) by means of dimension-reducing imaging (30).

2. The method according to claim 1, wherein, before determining the distance value (36), those bounding boxes (23) are excluded for which it is identified that they overlap in area with a bounding box (23) for which it is indicated by the classifier unit (25) that it depicts a traffic object (20, 21) by more than a predetermined minimum fraction, so as not to calculate a feature vector (31) for all the bounding boxes (23) and not to have to compare said feature vector with the statistical distribution models, and/or wherein
the subtraction comprises at least one of the further bounding boxes (23) being formed in that, for one of the bounding boxes (23) which has an overlap with a bounding box (23) for which it is indicated by the classifier unit (25) that it depicts a traffic object (20, 21), the nonoverlapping part is described as at least one further bounding box (23), in order to prevent the classifier unit (25) indicating a single pedestrian while a second, partially obscured pedestrian behind them is overlooked.

3. The method according to any one of the preceding claims, wherein the dimension-reducing imaging (30) involves a transformation of the temporary vector by means of a principal component analysis, and only a predetermined partial number of the vector components from the transformed vector are used for the feature vector (31).

4. The method according to any one of the preceding claims, wherein each of the distribution models models a portion (62) that is below a detection threshold of the classifier unit (25).

5. The method according to any one of the preceding claims, wherein a convolutional network (CNN) is used as the feature extraction unit (22) and/or a deep artificial neural network (DNN) is used as the classifier unit (25).

6. The method according to any one of the preceding claims, wherein activation values of artificial neurons of at least one network layer of the feature extraction unit (22) are determined as feature data from the feature extraction unit (22).

7. The method according to any one of the preceding claims, wherein if an undetected traffic object (20, 21) is indicated, a predetermined safety measure (40) is triggered in the motor vehicle (10).

8. The method according to any one of the preceding claims, wherein for generating the distribution models (35) from training data sets (60), bounding boxes (23) of completely depicted traffic objects (20, 21) are decomposed into the portions (62) and the image features (24) contained in the relevant portion (62) are combined to form respective training feature vectors (63), and the determined training feature vectors (63) are divided into clusters (66) by means of a cluster algorithm, wherein each cluster (66) constitutes one of the statistical distribution models (35).

9. A processor circuit for a motor vehicle (10), wherein the processor circuit is configured to carry out a method according to any one of claims 1 to 7.

10. A computer-readable storage medium containing program instructions which, when executed by a processor circuit, cause the processor circuit to carry out a method according to any one of claims 1 to 7 or, when executed by a computer, cause the computer to carry out a method according to claim 8.

## Revendications

1. Procédé de fonctionnement d'une détection (16) d'objets de circulation dans un circuit processeur d'un véhicule automobile (10), dans lequel au moins un ensemble (19) de données d'image, décrivant une représentation (30) respective d'un environnement (15) du véhicule automobile (10), est reçu en provenance d'au moins un capteur d'environnement (17),
et au moyen d'au moins un modèle d'apprentissage automatique, modèle ML, sur la base de l'ensemble (19) de données d'image respectif
• des cadres d'objet (23) contenant des représentations potentielles d'objets de circulation (20, 21) sont déterminés dans la représentation (30) et
• des données caractéristiques de caractéristiques d'image (24) sont extraites des données d'image de l'ensemble (19) de données d'image au moyen d'une unité (22) d'extraction de caractéristiques de l'au moins un modèle ML, et
• à l'intérieur du cadre d'objet (23) respectif, sur la base des caractéristiques d'image (24) qu'il contient et au moyen d'une unité de classification (25) de l'au moins un modèle ML, une détection d'un objet de circulation (20, 21) représenté intégralement ou à plus d'un pourcentage minimum prédéfini, le pourcentage minimum se situant dans une plage de 65 à 90 %, est respectivement réalisée et, à la suite de la détection, le cadre d'objet (23) respectif représentant un objet de circulation (20, 21) est identifié par un signal de détection, le signal de détection indiquant un identifiant du cadre d'objet (23) et/ou des coordonnées,
**caractérisé en ce que**
• pour chaque cadre d'objet (23) supplémentaire formé par calcul de différence, les caractéristiques d'image (24) qu'il contient sont regroupées en un vecteur de caractéristiques (31), le calcul de différence consistant à soustraire ou à supprimer d'un cadre d'objet (23) la partie de surface qui appartient à un cadre d'objet (23) contenant un objet de circulation (20, 21) détecté par l'unité de classification (25), et
• une valeur de distance (36) respective du vecteur de caractéristiques (31) par rapport à plusieurs modèles (35) de distribution statistique, dont chacun est déterminé à partir d'une modélisation de la distribution statistique de telles caractéristiques d'image (24) provenant uniquement d'une zone partielle (62) respective d'un objet de circulation (20, 21) et/ou d'un corps d'une personne, le terme « zone partielle » (62) signifiant ici que les modèles (35) de distribution reposent sur de tels vecteurs de caractéristiques qui ne représentent pas l'ensemble de l'objet de circulation (20, 21) ou d'un piéton, c'est-à-dire qu'ils ne représentent qu'une seule partie de corps ou un masquage de l'objet de circulation (20, 21) ou du piéton dont la « part d'occlusion » est comprise dans la plage de 25 % à 80 %, et
• la valeur de distance (36) est comparée à une valeur seuil (38) prédéfinie et,
• si, d'après la comparaison, la valeur de distance (36) par rapport à l'un des modèles (35) de distribution statistique est inférieure à la valeur seuil (38), il est signalé qu'un objet de circulation (20, 21) n'a pas été détecté par l'unité de classification (25) ; en effet, si la valeur de distance est inférieure à la valeur seuil, il existe une similitude ou une appartenance d'autant plus grande du vecteur de caractéristiques au modèle (35) de distribution, c'est-à-dire que le vecteur de caractéristiques représente, avec une probabilité d'autant plus grande, une zone partielle (2) d'un objet de circulation (20, 21) ou une partie de corps d'une personne et/ou d'un corps humain,
• le vecteur de caractéristiques (31) étant formé en regroupant les caractéristiques d'image (24) en un vecteur temporaire, puis en réduisant le vecteur temporaire au vecteur de caractéristiques (31) au moyen d'une représentation (30) à échelle réduite.

2. Procédé selon la revendication 1, dans lequel, avant la détermination de la valeur de distance (36), sont exclus les cadres d'objet (23) pour lesquels il est détecté qu'ils se superposent, en superficie, de plus d'un pourcentage minimal prédéfini, à un cadre d'objet (23) pour lequel l'unité de classification (25) signale qu'il représente un objet de circulation (20, 21), afin d'éviter d'avoir à calculer un vecteur de caractéristiques (31) pour tous les cadres d'objet (23) et à le comparer aux modèles de distribution statistique et/ou dans lequel
le calcul de différence comprend la formation d'au moins l'un des cadres d'objet (23) supplémentaires en superposant l'un des cadres d'objet (23) qui représente un objet de circulation (20, 21) avec un cadre d'objet (23) pour lequel l'unité de classification (25) signale qu'il représente un objet de circulation (20, 21), et en décrivant la partie non superposée comme au moins un cadre d'objet (23) supplémentaire afin d'empêcher l'unité de classification (25) de signaler un seul piéton tout en négligeant un second piéton partiellement masqué derrière lui.

3. Procédé selon l'une des revendications précédentes, dans lequel la représentation (30) à échelle réduite comprend une transformation du vecteur temporaire au moyen d'une analyse en composantes principales et, à partir du vecteur transformé, seul un nombre partiel prédéterminé des composantes du vecteur est utilisé pour le vecteur de caractéristiques (31).

4. Procédé selon l'une des revendications précédentes, dans lequel chacun des modèles de distribution modélise une telle zone partielle (62) qui se situe en dessous d'un seuil de détection de l'unité de classification (25).

5. Procédé selon l'une des revendications précédentes, dans lequel un réseau neuronal convolutif, CNN (pour « Convolutional Neural Network »), est utilisé comme unité (22) d'extraction de caractéristiques et/ou un réseau neuronal profond, DNN (pour « Deep Neural Network »), est utilisé comme unité de classification (25).

6. Procédé selon l'une des revendications précédentes, dans lequel des valeurs d'activation de neurones artificiels d'au moins une couche de réseau de l'unité (22) d'extraction de caractéristiques sont déterminées en tant que données de caractéristiques provenant de l'unité (22) d'extraction de caractéristiques.

7. Procédé selon l'une des revendications précédentes, dans lequel, dans le cas où un objet de circulation (20, 21) non détecté est signalé, une mesure de sécurité (40) prédéterminée est déclenchée dans le véhicule à moteur (10).

8. Procédé selon l'une des revendications précédentes, dans lequel, pour la génération des modèles (35) de distribution à partir d'ensembles (60) de données d'apprentissage, les cadres d'objet (23) d'objets de circulation (20, 21) entièrement représentés sont décomposés en zones partielles (62) et les caractéristiques d'image (24) contenues dans la zone partielle (62) respective sont regroupées en vecteurs (63) de caractéristiques d'apprentissage respectifs et, au moyen d'un algorithme de groupage, les vecteurs (63) de caractéristiques d'apprentissage déterminés sont répartis en agrégat (66), chaque agrégat (66) représentant l'un des modèles (35) de distribution statistique.

9. Circuit processeur pour véhicule à moteur (10), le circuit processeur étant conçu pour mettre en œuvre un procédé selon l'une des revendications 1 à 7.

10. Support de stockage lisible par ordinateur contenant des instructions de programme qui, lorsqu'elles sont exécutées par un circuit processeur, amènent celui-ci à mettre en œuvre un procédé selon l'une des revendications 1 à 7, ou qui, lorsqu'elles sont exécutées par un ordinateur, amènent celui-ci à mettre en œuvre un procédé selon la revendication 8.
